# EUROPEAN PATENT APPLICATION

(11) **EP 3 955 380 A1**
(43) Date of publication of application: **16.02.2022**
(21) Application number: 20799065.6
(22) Date of filing: 16.04.2020
(51) Int. Cl.: H01Q 1/12

(54) **ELECTRONIC DEVICE**

(30) Priority: 30.04.2019 CN 201910364175
(71) Applicant: GUANGDONG OPPO MOBILE TELECOMMUNICATIONS CORP., LTD., Wusha, Chang'an Dongguan Guangdong 523860 (CN)
(72) Inventor: LI, Si, Dongguan, Guangdong 523860 (CN)
(74) Representative: Manitz Finsterwald Patent- und Rechtsanwaltspartnerschaft mbB
(86) International application number: PCT/CN2020/085176
(87) International publication number: WO 2020/221017

(57) **Abstract**

An electronic device is provided. The electronic device includes a battery cover and an antenna module. The battery cover is made from a material not shielding electromagnetic signals. The battery cover includes an outer surface and an inner surface opposite to the outer surface. The outer surface is an appearance surface of the battery cover. The inner surface includes a side surface and a connecting surface connected with the side surface. The antenna module includes an antenna radiator attached to the side surface. The electronic device can ensure an appearance integrity of the electronic device, while ensuring normal operation of the antenna radiator.

## Description

### TECHNICAL FIELD

This disclosure relates to the technical field of electronic technology, and in particular to an electronic device.

### BACKGROUND

Millimeter wave, with characteristics of a great carrier frequency and a large bandwidth, is a general way of fifth generation (5G) to achieve ultra-high data transmission rates. Currently, many international mobile terminal equipment manufacturers have planned to make 5G functionality as a standard configuration for their new generation mobile terminal products. In related art, an antenna module is disposed in an electronic device, which requires large space of a whole machine. In addition, a slit for an antenna radiator needs to be made on a body of the electronic device, which will destroy appearance integrity of the electronic device.

### SUMMARY

Disclosed herein is implementations of an electronic device. The electronic device includes a battery cover and an antenna module. The battery cover is made from a material not shielding electromagnetic signals. The battery cover includes an outer surface and an inner surface opposite to the outer surface. The outer surface is an appearance surface of the battery cover. The inner surface includes a side surface and a connecting surface connected with the side surface. The antenna module includes an antenna radiator. The antenna radiator is attached to the side surface.

The electronic device provided in the disclosure includes the battery cover and the antenna module, the battery cover is made from a material not shielding electromagnetic signals, the inner surface of the battery cover includes the side surface and the connecting surface connected with the side surface, and the antenna radiator is attached to the side surface. The antenna radiator is disposed on the side surface of the inner surface of the battery cover, thus a size of the electronic device in a thickness direction will not be occupied and the electronic device can be lighter and thinner. In addition, compared to a way that the battery cover defines a slit for the antenna radiator, because the antenna radiator is disposed on the side surface of the inner surface of the battery cover, appearance integrity and appearance consistency of the electronic device can be ensured.

### BRIEF DESCRIPTION OF THE DRAWINGS

In order to describe technical solutions of implementations more clearly, the following will give a brief introduction to accompanying drawings used for describing the implementations. Apparently, the accompanying drawings hereinafter described are a part of implementations of the disclosure. Based on these drawings, those of ordinary skill in the art can also obtain other drawings without creative effort.
FIG. 1 is a schematic structural view of a first electronic device according to implementations of the present disclosure.
FIG. 2 is a schematic structural view of a battery cover of the electronic device in FIG. 1.
FIG. 3 is a schematic cross-sectional view of the battery cover of FIG. 2, taken along line A-A.
FIG. 4 is a schematic structural view of a first battery cover according to implementations of the present disclosure.
FIG. 5 is a schematic structural view of a second battery cover according to other implementations of the present disclosure.
FIG. 6 is a schematic structural view of a third battery cover according to other implementations of the present disclosure.
FIG. 7 is a schematic structural view of a fourth battery cover according to other implementations of the present disclosure.
FIG. 8 is a schematic structural view of a heat-dissipating member in FIG. 7.
FIG. 9 is a schematic structural view of a fifth battery cover according to other implementations of the present disclosure.
FIG. 10 is a schematic structural view of a sixth battery cover according to other implementations of the present disclosure.
FIG. 11 is a schematic cross-sectional view of the battery cover of FIG. 10, taken along line B-B.

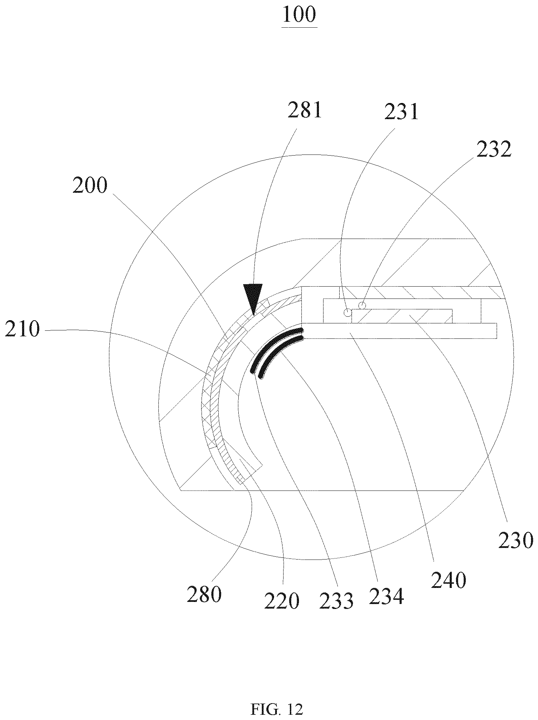

FIG. 12 is an enlarged schematic sectional view of the battery cover in an area P in FIG. 11.
FIG. 13 is a schematic structural view of a seventh battery cover according to other implementations of the present disclosure.
FIG. 14 is a schematic structural view of an eighth battery cover according to other implementations of the present disclosure.
FIG. 15 is a schematic structural view of a second electronic device according to other implementations of the present disclosure.
FIG. 16 is a schematic cross-sectional view of the electronic device of FIG. 15, taken along line C-C according to implementations of the present disclosure.
FIG. 17 is a schematic cross-sectional view of the electronic device of FIG. 15, taken along line C-C according to other implementations of the present disclosure.

### DETAILED DESCRIPTION

The following will give a clear and complete description to a technical solution of implementations in the disclosure, with reference to accompanying drawings of implementations in the disclosure. Apparently, the implementations described hereinafter are only a part of implementations in the disclosure, and not all of them. Based on implementations in the disclosure, all other implementations obtained by those of ordinary skill in the art without creative effort fall within protection scope of the disclosure.

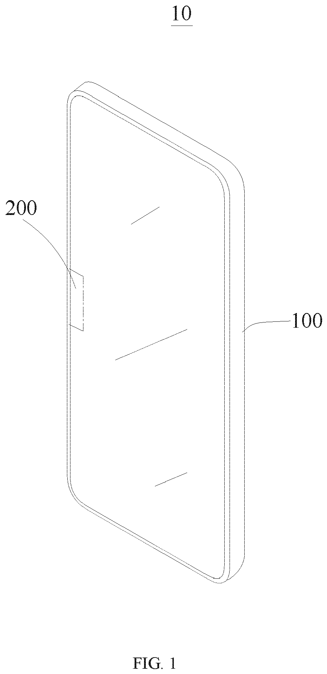

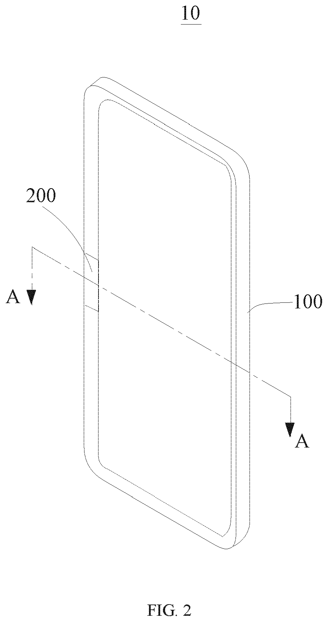

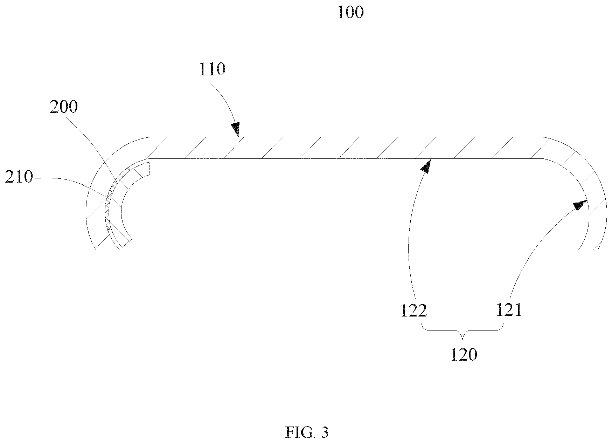

Reference can be made to FIG. 1, FIG. 2, and FIG. 3, an electronic device 10 provided in implementations of the present disclosure includes a battery cover 100 and an antenna module 200. The battery cover 100 is made from a material not shielding electromagnetic signals (i.e., non-electromagnetic wave shielding material). The battery cover 100 includes an outer surface 110 and an inner surface 120 opposite to the outer surface 110. The outer surface 110 is an appearance surface (i.e., exterior surface) of the battery cover 100. The inner surface 120 includes a side surface 121 and a connecting surface 122 connected with the side surface 121. The antenna module 200 includes an antenna radiator 210. The antenna radiator 210 is attached to the side surface 121.

The electronic device may be any device with communication and storage functions, such as a tablet computer, a cell phone, an e-reader, a remote control, a personal computer (PC), a laptop, a vehicle device, a network television, a wearable device, and other smart devices with network functions.

The antenna radiator 210 may be a transparent patch antenna. The battery cover 100 is made from a material not shielding electromagnetic signals, in other words, the battery cover 100 will not shield an electromagnetic wave signal. Thus, when the antenna radiator 210 is disposed on the inner surface 120 of the battery cover 100, the electromagnetic wave signal radiated from the antenna radiator 210 can penetrate through the battery cover 100. The battery cover 100 may be made from glass or sapphire. The battery cover 100 may be an integrated structure.

The inner surface 120 of the battery cover 100 includes the connecting surface 122 and the side surface 121 surrounding the connecting surface 122. The side surface 121 may be an arc-shaped surface or a flat surface. When the side surface 121 is an arc-shaped face, the plane of curvature of the side surface 121 is adjacent to an inner side of the battery cover 100. The antenna radiator 210 is attached to the side surface 121. The antenna radiator 210 is disposed on the side surface 121, thus a size of the battery cover 100 in a thickness direction will not be occupied, the battery cover 100 can be thinner, and a light and thin design of the electronic device 10 can be achieved, compared to a way that the antenna radiator 210 is disposed on the connecting surface 122. In addition, the antenna radiator 210 is attached to the side surface 121, thus the antenna radiator 210 can be supported by the side surface 121 and the antenna radiator 210 can be avoided from being detached from the battery cover 100. Furthermore, the antenna radiator 210 is disposed on the inner surface 120 of the battery cover 100, thus structural integrity of the battery cover 100 will not be damaged, as such, appearance consistency of the battery cover 100 can be improved and an appearance of the electronic device 10 can be more coordinated.

The electronic device 10 provided in the disclosure includes the battery cover 100 and the antenna module 200, the battery cover 100 is made from a material not shielding electromagnetic signals, the inner surface 120 of the battery cover 100 includes the side surface 121 and the connecting surface 122 connected with the side surface 121, and the antenna radiator 210 is attached to the side surface 121. The antenna radiator 210 is disposed on the side surface 121 of the inner surface 120 of the battery cover 100, thus a size of the electronic device 10 in a thickness direction will not be occupied and the electronic device 10 can be lighter and thinner. In addition, compared to a way that the battery cover 100 defines a slit for the antenna radiator 120, because the antenna radiator 210 is disposed on the side surface 121 of the inner surface 120 of the battery cover 100, appearance integrity and appearance consistency of the electronic device 10 can be ensured.

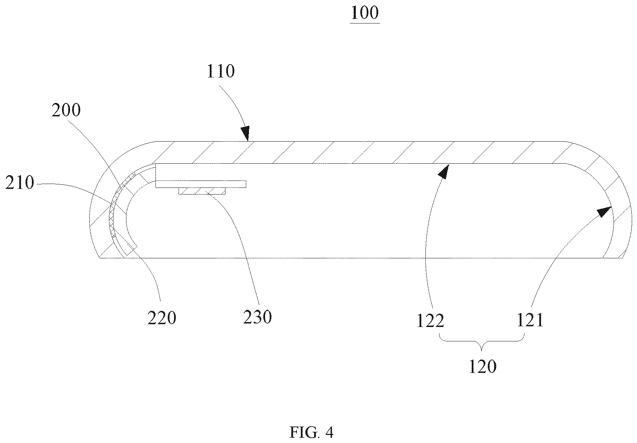

As illustrated in FIG. 4, the antenna module 200 further includes a flexible substrate 220 and a radio frequency chip 230. The flexible substrate 220 is disposed on a side of the antenna radiator 210 away from the side surface 121. The radio frequency chip 230 is configured to emit a radio frequency signal. The antenna radiator 210 is configured to generate the electromagnetic wave signal according to the radio frequency signal.

The flexible substrate 220 may be flexible materials such as industrial liquid crystal polymer (LCP), polyimide (PI), polydimethylsiloxane (PDMS), silicon-based thin film, and the like.

The flexible substrate 220 supports the antenna radiator 210, such that the antenna radiator 210 can be attached to the side surface 121 of the battery cover 100. The radio frequency chip 230 can be fixed to the flexible substrate 220 and be configured to generate the radio frequency signal. The radio frequency signal is also known as an excitation signal. When the antenna radiator 210 receives the radio frequency signal, the antenna radiator 210 is configured to generate the electromagnetic wave signal based on the radio frequency signal, such that electromagnetic wave communication can be achieved.

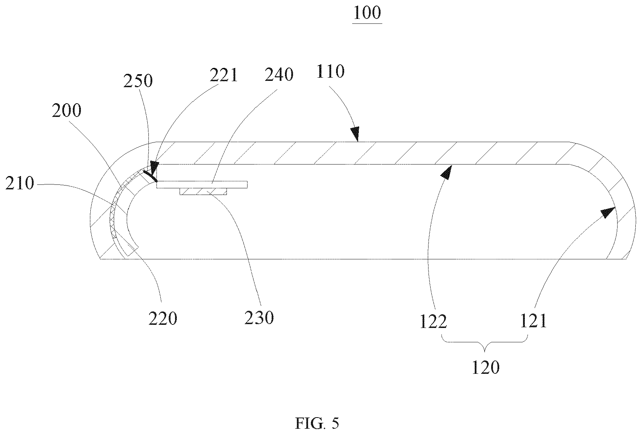

As illustrated in FIG. 5, the antenna module 200 further includes a feeding panel 240, which is electrically connected with the radio frequency chip 230. The feeding panel 240 is electrically connected with the antenna radiator 210 via a radio frequency line 250.

The flexible substrate 220 defines an accommodation hole 221. The radio frequency line 250 is received in the accommodation hole 221. The flexible substrate 220 defines the accommodation hole 221, which is configured to receive the radio frequency line 250, such that a stable electrical connection between the feeding panel 240 and the antenna radiator 210 can be maintained. The radio frequency chip 230 can be fixed to the feeding panel 240, and the feeding panel 240 is fixed to the flexible substrate 220. The feeding panel 240 is configured to transmit the radio frequency signal generated by the radio frequency chip 230 to the antenna radiator 210 through the radio frequency line 250.

As an implementation, the radio frequency chip 230 and the antenna radiator 210 are disposed on two opposite sides of the feeding panel 240. When there is enough space in the electronic device 10, the radio frequency chip 230 and the antenna radiator 210 can be disposed on the two opposite sides of the feeding panel 240, in other words, the feeding panel 240 is disposed between the radio frequency chip 230 and the antenna radiator 210, as such unfavorable interference generated by the radio frequency chip 230 to the antenna radiator 210 can be reduced.

As an implementation, the feeding panel 240 and the radio frequency chip 230 are packaged as an integrated structure, and the integrated structure is communicated with the antenna radiator 210 via surface mount technology (SMT). As another implementation, the feeding panel 240 may also be manufactured individually via technologies such as high density interconnector (HDI) or integrated circuit (IC) package carrier, and the like, and then the feeding panel 240 is communicated with the radio frequency chip 230 and the antenna radiator 210 via SMT. As another implementation, the feeding panel 240 may also be integrally formed with the antenna radiator 210, and the integrated structure is communicated with the radio frequency chip 230 via SMT.

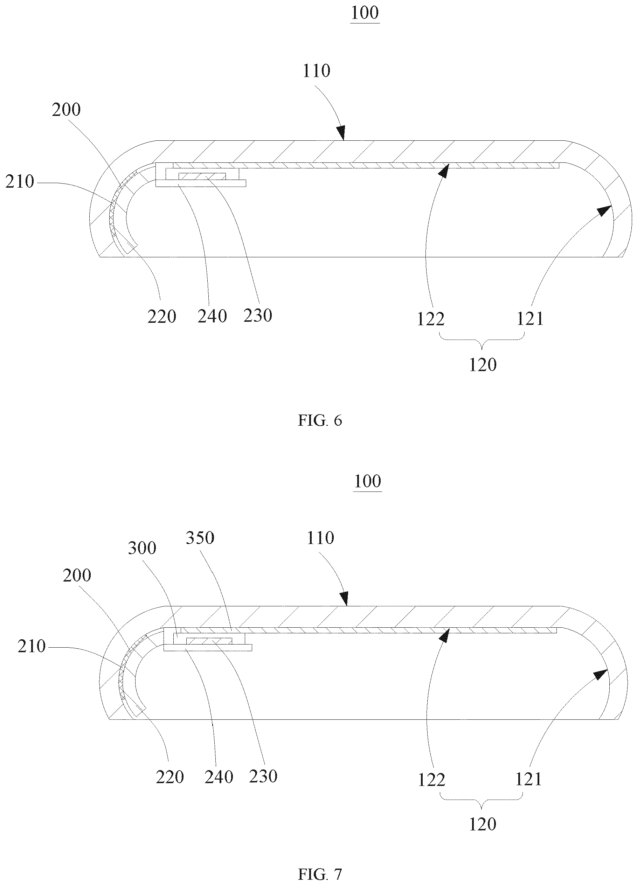

As an implementation, reference can be further made to FIG. 6, the radio frequency chip 230 and the antenna radiator 210 are disposed on a same side of the feeding panel 240. When the electronic device 10 has a smaller thickness, the radio frequency chip 230 and the antenna radiator 210 are disposed on the same side of the feeding panel 240. As such, the size of the electronic device 10 in the thickness direction can be reduced, and the light and thin design of the electronic device 10 can be achieved.

As illustrated in FIG. 7, the electronic device 10 further includes a thermal conductive adhesive 300 and a heat-dissipating member 350. The thermal conductive adhesive 300 covers the radio frequency chip 230. The heat-dissipating member 350 is disposed between the connecting surface 122 and the thermal conductive adhesive 300. The thermal conductive adhesive 300 and the heat-dissipating member 350 cooperate with each other, so as to dissipate heat of the radio frequency chip 230.

The heat-dissipating member 350 may be a graphite sheet. The radio frequency chip 230 and the heat-dissipating member 350 are bonded together via the thermal conductive adhesive 300. The heat-dissipating member 350 is fixed to the battery cover 100 via an adhesive. The heat-dissipating member 350 extends in a direction away from the antenna radiator 210. Since the thermal conductive adhesive 300 covers the radio frequency chip 230, the heat-dissipating member 350 is disposed between the thermal conductive 300 and the connecting surface 122 of the battery cover 100, and the heat-dissipating member 350 extends towards the side away from the antenna radiator 210, heat of the radio frequency chip 230 can be dissipated quickly and heat around the radio frequency chip 230 can be conducted away quickly. As such, a local high temperature of the radio frequency chip 230, which will cause damage to the radio frequency chip 230, can be avoided.

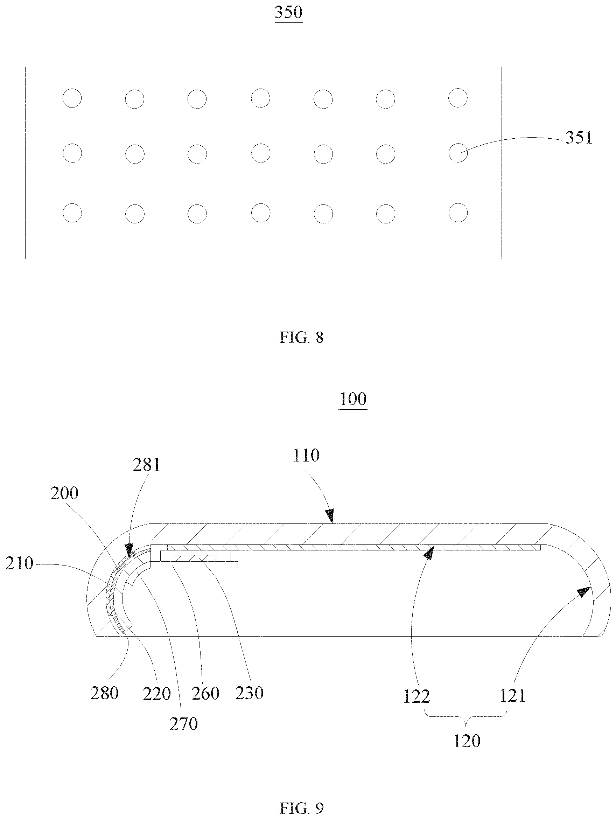

As illustrated in FIG. 8, the heat-dissipating member 350 defines multiple heat-dissipating holes 351 arranged in an array. Specifically, the heat-dissipating member 350 defines the multiple heat-dissipating holes 351 in a honeycomb, and heat of the heat-dissipating member 350 can be dissipated quickly and heat from the radio frequency chip 230 can be conducted away quickly.

Furthermore, the heat-dissipating member 350, on a surface away from the connecting surface 122, is provided with a heat-absorbing layer, which is configured to absorb heat from the heat-dissipating member 350. The heat-absorbing layer includes multiple heat-absorbing units spaced apart, and the multiple heat-absorbing units are arranged to avoid the heat-dissipating holes 351. The heat-absorbing units are configured to absorb heat of the heat-dissipating member 350. Adjacent heat-absorbing units are spaced apart, such that the adjacent heat-absorbing units will not interfere with each other, which is helpful to avoid a stress concentration between the adjacent heat-absorbing units, so as to make stress distribution of the multiple heat-absorbing units more uniform. The heat-absorbing layer may be paraffin wax.

As illustrated in FIG. 9, the antenna module 200 further includes a feeding body 260 electrically connected with the radio frequency chip 230 and a feeding member 270 which extends from one side of the feeding body 260. A feeding layer 280 is disposed between the flexible substrate 220 and the antenna radiator 210, the feeding layer 280 constitutes a ground pole of the antenna radiator 210, and the feeding layer 280 defines a slit 281. The feeding member 270 is disposed corresponding to the slit 281, so as to couple and feed the antenna radiator 210 through the slit 281.

As an implementation, the feeding body 260 and the feeding member 270 are integrally formed in a same process, as such, on one hand, connection strength between the feeding body 270 and the feeding member 270 can be enhanced, on the other hand, there is no need to additionally provide a fixing structure between the feeding body 270 and the feeding member 270, thus the feeding body 260 and the feeding member 270 can be arranged more compactly, and the electronic device 10 can be designed more compactly.

As another implementation, the feeding body 260 and the feeding member 270 are two independent parts. The feeding body 260 and the feeding member 270 are fixedly connected with each other via welding. The feeding body 260 and the feeding member 270 can be manufactured independently via their own processing processes, such that processing efficiency can be improved.

The feeding body 260 is electrically connected with the radio frequency chip 230. The radio frequency signal generated by the radio frequency chip 230 can be transmitted to the feeding body 260, and then transmitted to the feeding member 270 through the feeding body 260. The feeding member 270 is configured to transmit the radio frequency signal to the antenna radiator 210, thus the antenna radiator 210 can generate the electromagnetic wave signal. As such, the electromagnetic wave communication can be achieved.

Furthermore, the feeding layer 280 is disposed between the flexible substrate 220 and the antenna radiator 210. The feeding layer 280 constitutes the ground pole of the antenna radiator 210, which is configured to make the antenna radiator 210 grounded. The feeding layer 280 and the feeding member 270 are disposed on two opposite sides of the flexible substrate 220. The feeding layer 280 defines the slit 281. The feeding member 270 is disposed corresponding to the slit 281, in other words, at least part of a projection of the feeding member 270 on the feeding layer 280 falls into the slit 281. The feeding member 270 is configured to transmit the radio frequency signal generated by the radio frequency chip 230 to the antenna radiator 210 through the slit 281 in the feeding layer 280. In other words, the feeding member 270 is configured to transmit the radio frequency signal generated by the radio frequency chip 230 to the antenna radiator 210 via coupled feeding, thus the antenna radiator 210 can generate the electromagnetic wave signal and the electromagnetic wave communication can be achieved. By means of coupled feeding, there is no need to arrange the radio frequency line 250 and a limit structure of the radio frequency line 250, etc., and stability of feeding can be ensured.

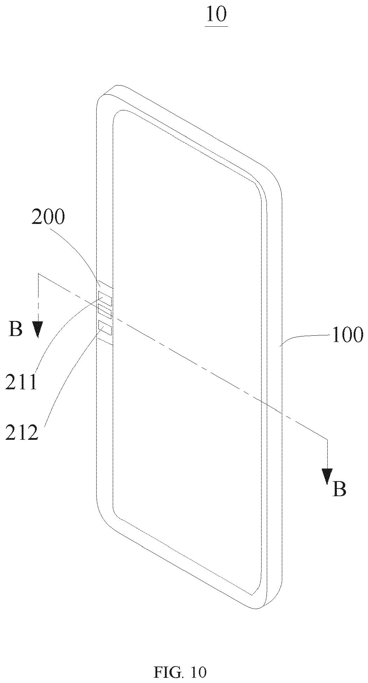

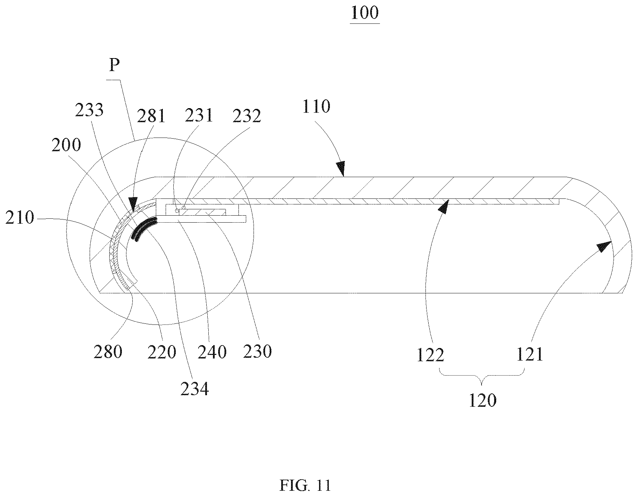

As illustrated in FIG. 10, FIG. 11 and FIG, 12, the antenna radiator 210 includes a first radiator 211 and a second radiator 212. The first radiator 211 and the second radiator 212 are spaced apart along a length direction of the battery cover 100. The radio frequency chip 230 is configured to generate a first radio frequency signal and a second radio frequency signal. The radio frequency chip 230 has a first output end 231 and a second output end 232. The first output end 231 is configured to output the first radio frequency signal. The first radiator 211 is configured to radiate an electromagnetic wave signal of a first frequency band according to the first radio frequency signal. The second output end 232 is configured to output the second radio frequency signal. The second radiator 212 is configured to radiate an electromagnetic wave signal of a second frequency band according to the second radio frequency signal. The first frequency band is different from the second frequency band.

As an implementation, the first radiator 211 and the second radiator 212 are spaced apart along the length direction of the battery cover 100. Due to a great size of the battery cover 100 along the length direction, the first radiator 211 and the second radiator 212 are spaced apart along the length direction, such that the first radiator 211 and the second radiator 212 can cover a greater area. When one antenna radiator 210 is blocked and interfered, the other antenna radiator 210 can still operate normally, thus stable operating condition of the antenna radiator 210 can be ensured.

The radio frequency chip 230 has the first output end 231 and the second output end 232. The electronic device 10 further includes a first feeding line 233 and a second feeding line 234. The first output end 231 is configured to output the first radio frequency signal and the second output end 232 is configured to output the second radio frequency signal. The first radio frequency signal generated by the radio frequency chip 230 is transmitted to the first feeding line 233. Because the first feeding line 233 is disposed corresponding to the slit 281 in the feeding layer 280, the first feeding line 233 can transmit the received first radio frequency signal to the first radiator 211 and the second radiator 212 via coupled feeding. The first radiator 211 can generate an electromagnetic wave signal of a first frequency band after receiving the first radio frequency signal from the first feeding line 233 via coupled feeding. The second radiator 212 can generate an electromagnetic wave signal of a second frequency band after receiving the first radio frequency signal from the first feeding line 233 via coupled feeding. The first radiator 211 can generate an electromagnetic wave signal of a third frequency band after receiving the second radio frequency signal from the second feeding line 234 via coupled feeding. The second radiator 212 can generate an electromagnetic wave signal of a fourth frequency band after receiving the second radio frequency signal from the second feeding line 234 via coupled feeding. As such, the antenna module 200 can operate in multiple frequency bands, a range of frequency bands in which the antenna radiator 210 operates can be broadened, and the radiation efficiency of the antenna radiator 210 can also be improved.

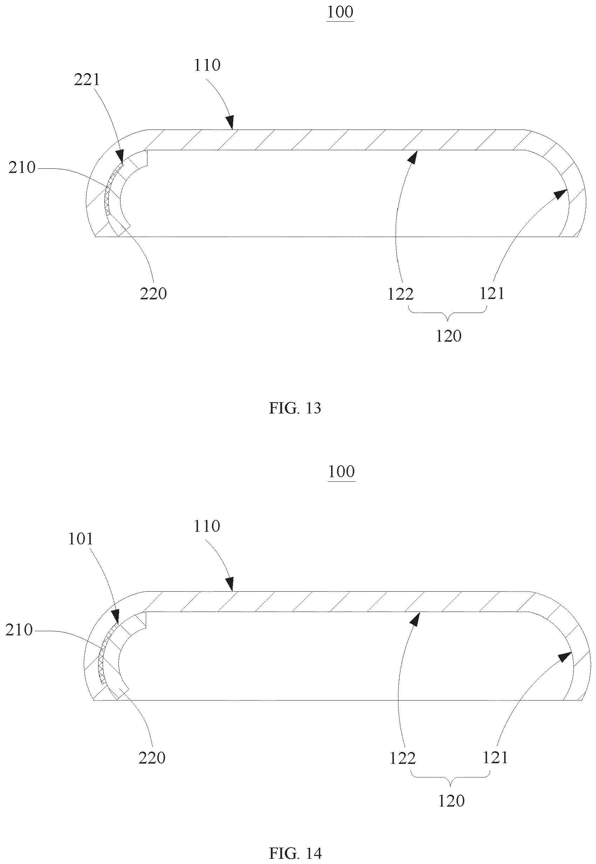

As illustrated in FIG. 13, the flexible substrate 220 defines a mounting groove 221. The antenna radiator 210 is received in the mounting groove 221.

Specifically, the flexible substrate 220 defines the mounting groove 221. The antenna radiator 210 is received in the mounting groove 221 of the flexible substrate 220, such that space occupied by the antenna radiator 210 can be reduced and the light and thin design of the electronic device 10 can be achieved. In addition, the antenna radiator 210 is received in the mounting groove 221 of the flexible substrate 220, such that the mounting groove 221 can limit position of the antenna radiator 210. Furthermore, the flexible substrate 220 is attached to the side surface 121 of the inner surface 120 of the battery cover 100, such that the position of the antenna radiator 210 can be further stabilized, and the antenna radiator 210 can be avoided from being detached from the inner surface 120 of the battery cover 100. The flexible substrate 220 can be fixed to the inner surface 120 of the battery cover 100 via an adhesive, such that the antenna radiator 210 can be stably attached to the inner surface 120 of the battery cover 100, and a stable radiation effect of the antenna radiator 210 can be maintained.

As illustrated in FIG. 14, the battery cover 100 defines an accommodation groove 101. The antenna radiator 210 is received in the accommodation groove 101.

Specifically, the battery cover 100 defines the accommodation groove 101. The antenna radiator 210 is disposed in the accommodation groove 101, such that space occupied by the antenna radiator 210 can be reduced and the light and thin design of the electronic device 10 can be achieved. In addition, the antenna radiator 210 is received in the accommodation groove 101 of the battery cover 100, such that the accommodation groove 101 can limit position of the antenna radiator 210. Furthermore, the flexible substrate 220 is attached to the side surface 121 of the inner surface 120 of the battery cover 100, such that the position of the antenna radiator 210 can be stabilized, and the antenna radiator 210 can be avoided from being detached from the inner surface 120 of the battery cover 100. The flexible substrate 220 is fixed to the inner surface 120 of the battery cover 100 via an adhesive, such that the antenna radiator 210 can be stably attached to the inner surface 120 of the battery cover 100, and the stable radiation effect of the antenna radiator 210 can also be maintained.

Furthermore, the flexible substrate 220 is fixed to the battery cover 100 via an optical adhesive. The antenna radiator 210 is fixed to the battery cover 100 via the optical adhesive. The flexible substrate 220 is fixed to the inner surface 120 of the battery cover 100 via the optical adhesive, and the antenna radiator 210 is fixed to the inner surface 120 of the battery cover 100 via the optical adhesive; as such, on one hand, a stable connection between the flexible substrate 220 and the battery cover 100 maintained, on the other hand, a stable connection between the antenna radiator 210 and the battery cover 100 can be maintained. As such, any one of the antenna radiator 210, the flexible substrate 220, and the battery cover 100 can be avoided from being detached from each other, and the stable radiation effect of the antenna radiator 210 can be maintained.

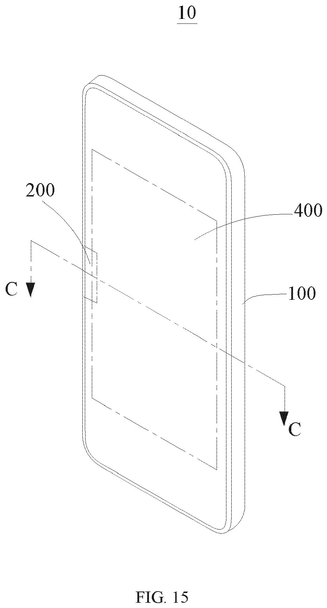

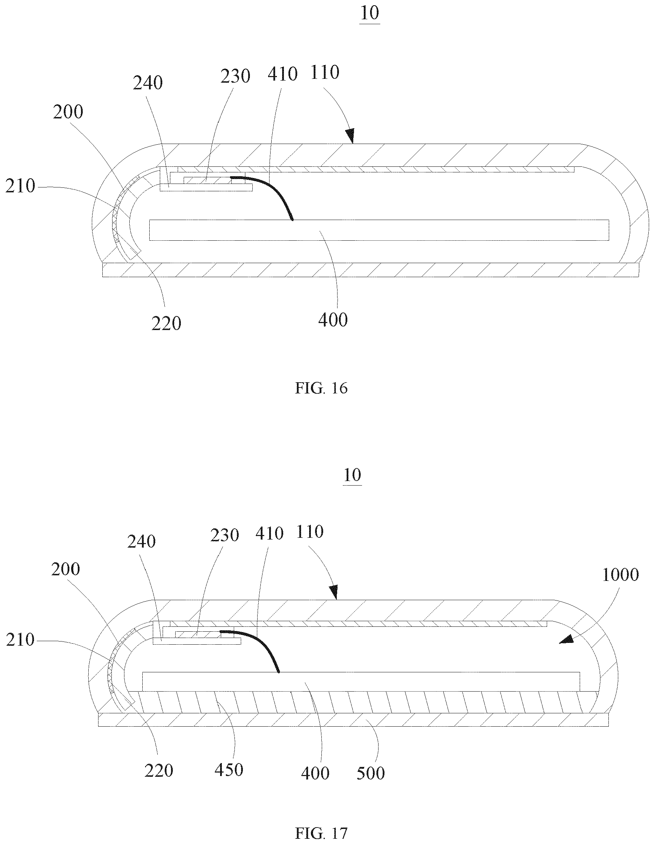

As illustrated in FIG. 15 and FIG. 16, the electronic device 10 further includes a main board 400, and the main board 400 is electrically connected with the radio frequency chip 230 through a signal line 410. The main board 400 is configured to emit a control signal, and the control signal is transmitted to the radio frequency chip 230 through the signal line 410. The radio frequency chip 230 is configured to generate the radio frequency signal according to the control signal. The antenna radiator 210 is configured to generate the electromagnetic wave signal according to the radio frequency signal.

The main board 400 is electrically connected with the radio frequency chip 230 through the signal line 410. The control signal generated by the main board 400 is transmitted to the radio frequency chip 230 through the signal line 410. The radio frequency chip 230 is configured to generate the radio frequency signal according to the control signal. The radio frequency signal is transmitted to the antenna radiator 210. The antenna radiator 210 is configured to generate the electromagnetic wave signal according to the radio frequency signal to achieve the electromagnetic wave communication. The main board 400 is configured to suppress the radiation of the electromagnetic wave signal emitted by the antenna radiator 210 towards a side of the main board 400 away from the antenna radiator 210.

Specifically, the main board 400 is provided with the ground pole, thus components in the antenna radiator 210 can be grounded and static electricity can be eliminated. In addition, due to a great area of the main board 400, the electromagnetic wave signal emitted by the antenna radiator 210 can be inhibited from radiating towards the side of the main board 400 away from the radio frequency chip 230. The main board 400, on the side away from the radio frequency chip 230, is provided with a display screen, thus interference of the electromagnetic wave signal emitted by the antenna radiator 210 on a display function of the display screen can be avoided.

As illustrated in FIG. 17, the electronic device 10 further includes a middle frame 450 and a screen 500. The middle frame 450 supports the main board 400 and the screen 500. The middle frame 450 and the battery cover 100 enclose an accommodation space 1000. The antenna module 200 and the main board 400 are received in the accommodation space 1000. The main board 400 is configured to suppress the radiation of the electromagnetic wave signal generated by the antenna radiator 210 towards the screen 500.

Specifically, the screen 500 is disposed on the side of the main board 400 away from the antenna radiator 210. The main board 400 can suppress the radiation of the electromagnetic wave signal emitted by the antenna radiator 210 towards a side facing the screen 500, such that the electromagnetic wave signal generated by the antenna radiator 210 can be avoided from being coupled with the screen 500, and the interference to display of the screen 500 can be avoided.

The middle frame 450 and the battery cover 100 enclose the accommodation space 1000. The screen 500 is disposed outside the accommodation space 1000. The antenna module 200 and the main board 400 are received in the accommodation space 1000. The middle frame 450 supports the main board 400 and the screen 500.

The above implementations in this disclosure are introduced in detail. In this disclosure, principles and implementations are elaborated with specific examples. The above description is only used to help understand methods and core ideas of this disclosure. At the same time, for those of ordinary skill in the art, according to ideas of this disclosure, there will be changes in specific implementations and application scope. In summary, contents of this specification should not be understood as limitation of this disclosure.

## Claims

1. An electronic device, comprising:
a battery cover, being made from a material not shielding electromagnetic signals and comprising an outer surface and an inner surface opposite to the outer surface, wherein the outer surface is an appearance surface of the battery cover, the inner surface comprising a side surface and a connecting surface connected with the side surface; and
an antenna module, comprising an antenna radiator attached to the side surface.

2. The electronic device of claim 1, wherein the antenna module further comprises a flexible substrate and a radio frequency chip; the flexible substrate is disposed on a side of the antenna radiator away from the side surface, the radio frequency chip is configured to emit a radio frequency signal, and the antenna radiator is configured to generate an electromagnetic wave signal according to the radio frequency signal.

3. The electronic device of claim 2, wherein the antenna module further comprises a feeding panel, the feeding panel is electrically connected with the radio frequency chip, and the feeding panel is electrically connected with the antenna radiator via a radio frequency line.

4. The electronic device of claim 3, wherein the flexible substrate defines an accommodation hole, and the radio frequency line is received in the accommodation hole.

5. The electronic device of claim 3 or 4, wherein the radio frequency chip and the antenna radiator are respectively disposed on two opposite sides of the feeding panel.

6. The electronic device of claim 3 or 4, wherein the radio frequency chip and the antenna radiator are disposed on a same side of the feeding panel.

7. The electronic device of claim 6, further comprising:
a thermal conductive adhesive covering the radio frequency chip; and
a heat-dissipating member disposed between the connecting surface and the thermal conductive adhesive;
wherein the thermal conductive adhesive and the heat-dissipating member cooperate with each other to dissipate heat of the radio frequency chip.

8. The electronic device of claim 7, wherein the heat-dissipating member is fixed to the battery cover via an adhesive, and the heat-dissipating member extends towards a side away from the antenna radiator.

9. The electronic device of claim 8, wherein the heat-dissipating member defines a plurality of heat-dissipating holes arranged in an array.

10. The electronic device of claim 3, wherein the feeding panel is fixed to the flexible substrate.

11. The electronic device of claim 2, wherein the antenna module further comprises:
a feeding body electrically connected with the radio frequency chip;
a feeding layer disposed between the flexible substrate and the antenna radiator, wherein the feeding layer constitutes a ground pole of the antenna radiator and defines a slit; and
a feeding member, extending from one side of the feeding body and being disposed corresponding to the slit, so as to couple and feed the antenna radiator through the slit.

12. The electronic device of claim 2, wherein the antenna radiator comprises a first radiator and a second radiator, and the first radiator and the second radiator are spaced apart along a length direction of the battery cover; and
the radio frequency chip is configured to generate a first radio frequency signal and a second radio frequency signal, the radio frequency chip has a first output end and a second output end, the first output end is configured to output the first radio frequency signal, the first radiator is configured to radiate an electromagnetic wave signal of a first frequency band according to the first radio frequency signal, the second output end is configured to output the second radio frequency signal, the second radiator is configured to radiate an electromagnetic wave signal of a second frequency band according to the second radio frequency signal, and the first frequency band is different from the second frequency band.

13. The electronic device of claim 2, wherein the flexible substrate defines a mounting groove, and the antenna radiator is received in the mounting groove.

14. The electronic device of claim 2, wherein the battery cover defines an accommodation groove, and the antenna radiator is received in the accommodation groove.

15. The electronic device of claim 13 or 14, wherein the flexible substrate is fixed to the battery cover via an optical adhesive.

16. The electronic device of any of claims 1 to 4, wherein the antenna radiator is fixed to the battery cover via an optical adhesive.

17. The electronic device of claim 2, further comprising a main board, wherein the main board is electrically connected with the radio frequency chip through a signal line; a control signal emitted by the main board is transmitted to the radio frequency chip through the signal line; the radio frequency chip is configured to generate the radio frequency signal according to the control signal; and the antenna radiator is configured to generate the electromagnetic wave signal according to the radio frequency signal.

18. The electronic device of claim 17, further comprising:
a screen; and
a middle frame supporting the main board and the screen, wherein the middle frame and the battery cover enclose an accommodation space, the antenna module and the main board are received in the accommodation space, and the main board is configured to suppress the radiation of the electromagnetic wave signal generated by the antenna radiator towards the screen.

19. The electronic device of any of claims 1 to 4, wherein the battery cover is made from glass or sapphire.

20. The electronic device of any of claims 1 to 4, wherein the battery cover has an integrated structure.
